# EUROPÄISCHE PATENTSCHRIFT

(11) **EP 3 311 120 B1**
(45) Veröffentlichungstag und Bekanntmachung des Hinweises auf die Patenterteilung: **17.04.2019**
(21) Anmeldenummer: 16728691.3
(22) Anmeldetag: 13.06.2016
(51) Int. Cl.: G01D 18/00, G01D 5/20, G01D 5/244, G01B 7/30

(54) **VORRICHTUNGEN UND VERFAHREN ZUR AUSWERTUNG EINES SIGNALS VON EINEM DREHWINKELGEBER**
DEVICES AND METHODS FOR ANALYZING A SIGNAL EMITTED BY A ROTATIONAL ANGLE SENSOR
DISPOSITIF ET PROCÉDÉ D'ÉVALUATION D'UN SIGNAL PROVENANT D'UN CAPTEUR D'ANGLE DE ROTATION

(30) Priorität: 18.06.2015 DE 102015211258
(43) Veröffentlichungstag der Anmeldung: 25.04.2018
(73) Patentinhaber: Robert Bosch GmbH, 70442 Stuttgart (DE)
(72) Erfinder: EBERLEIN, Edwin, 70197 Stuttgart (DE); UNGERMANN, Michael, 64285 Darmstadt (DE); LECHNER, Benjamin, 75242 Neuhausen (DE); ZIRKEL, Daniel, 75446 Wiernsheim-Serres (DE); RAICHLE, Daniel, 71665 Vaihingen (DE); BRUCKHAUS, Tim, 71679 Asperg (DE)
(86) Internationale Anmeldenummer: PCT/EP2016/063467
(87) Internationale Veröffentlichungsnummer: WO 2016/202728

(56) Entgegenhaltungen:
- WO-A1-01/63739
- WO-A2-2008/036921
- US-A1- 2015 100 264

## Beschreibung

Die vorliegende Erfindung betrifft eine Vorrichtung und ein Verfahren zur Auswertung eines Signals von einem Drehwinkelgeber.

### Stand der Technik

Elektro- und Hybridfahrzeuge gewinnen zunehmend an Bedeutung. Zur Regelung von permanenterregten Synchronmaschinen (PSM) und elektrisch erregten Synchronmaschinen (ESM), wie sie in solchen Fahrzeugen eingesetzt werden, ist die Kenntnis des Rotorlagewinkels derartiger Maschinen erforderlich. Weiterhin ist zur Regelung von Asynchronmaschinen (ASM) die Kenntnis der elektrischen Frequenz des Antriebs notwendig. Zur Ermittlung des Rotorlagewinkels bzw. der elektrischen Frequenz können verschiedene Sensorarten eingesetzt werden. Zum Beispiel sind Sensoren auf Basis des Wirbelstrom-Effekts, Resolver oder digitale Winkelgeber möglich.

Ein Resolver wird dabei beispielsweise mit einem vorzugsweise sinusförmigen Trägersignal angeregt. Als Empfängersignale des Resolvers erhält man dabei in der Regel gestörte, amplitudenmodulierte Spannungen, aus deren Einhüllenden die Information über die Rotorlage gewonnen werden kann.

Die deutsche Patentanmeldung DE 10 2011 078 583 A1 offenbart beispielsweise eine Auswertung von Resolver-Sensorsignalen in einem Fahrzeug. Ein Resolver nimmt hierzu eine Drehbewegung eines Rotors auf, und ein Prozessorelement verarbeitet die sinus- bzw. kosinusförmigen Ausgangssignale des Resolver.

Aufgrund der großen Bedeutung der Winkelsignale für die Regelung von Maschinen bzw. Antrieben ist es wünschenswert, auftretende Fehler in dem In der US 2015/100264 A1 ist ein Verfahren zum Kalibrieren eines Drehwinkelgebers beschrieben.

Drehwinkelgeber bzw. dem Signalpfad und der weiterverarbeitenden Logik möglichst frühzeitig und zuverlässig zu detektieren.

Es besteht daher ein Bedarf für eine Vorrichtung und ein Verfahren zur Auswertung eines Signals von einem Drehwinkelgeber, das mögliche Störungen bzw. Fehler bei der Bestimmung eines Rotorwinkels erkennen kann. Darüber hinaus besteht ein Bedarf nach einer zuverlässigen und dabei gleichzeitig einfachen und kostengünstigen Auswertung der Rotorwinkelbestimmung.

### Offenbarung der Erfindung

Hierzu schafft die vorliegende Erfindung gemäß einem ersten Aspekt eine Vorrichtung zur Auswertung eines Signals von einem Drehwinkelgeber mit den Merkmalen des unabhängigen Patentanspruchs 1.

Demgemäß schafft die vorliegende Erfindung eine Vorrichtung zur Auswertung eines Signals von einem Drehwinkelgeber mit einer ersten Verarbeitungseinheit, einer zweiten Verarbeitungseinheit und einer Analyseeinrichtung. Die erste Verarbeitungseinheit umfasst einen Bandpassfilter und eine erste Berechnungseinheit. Das Bandpassfilter ist dazu ausgelegt, Frequenzanteile unterhalb und oberhalb eines vorbestimmten Frequenzbereichs abzuschwächen oder gegebenenfalls vollständig zu dämpfen. Das Bandpassfilter ist ferner dazu ausgelegt, einen Gleichanteil des Signals von dem Drehwinkelgeber zu unterdrücken. Das Bandpassfilter stellt daraufhin ein erstes gefiltertes Signal bereit. Die erste Berechnungseinheit ist dazu ausgelegt, basierend auf dem ersten gefilterten Signal einen ersten Winkelwert zu berechnen. Die zweite Verarbeitungseinheit umfasst ein Tiefpass- und Bandpassfilter sowie eine zweite Berechnungseinheit. Das Tiefpass- und Bandpassfilter ist dazu ausgelegt, Frequenzanteile oberhalb einer vorbestimmten Grenzfrequenz abzuschwächen oder gegebenenfalls vollständig zu dämpfen. Das Tiefpass- und Bandpassfilter stellt daraufhin ein zweites gefiltertes Signal bereit. Die zweite Berechnungseinheit ist dazu ausgelegt, basierend auf dem zweiten gefilterten Signal einen zweiten Winkelwert zu berechnen. Ferner ist die Analyseeinrichtungen dazu ausgelegt, den ersten berechneten Winkelwert und den zweiten berechneten Winkelwert miteinander zu vergleichen.

Gemäß einem weiteren Aspekt schafft die vorliegende Erfindung ein Verfahren zur Auswertung eines Signals von einem Drehwinkelgeber mit den Merkmalen des nebengeordneten Patentanspruchs 9.

Demgemäß schafft die vorliegende Erfindung ein Verfahren mit den Schritten des Empfangens eines Signals von dem Drehwinkelgeber und des Anwenden einer Bandpass-Filterung auf das empfangene Signal von dem Drehwinkelgeber. Daraufhin wird ein erstes gefiltertes Signal erhalten, wobei Frequenzanteile unterhalb und oberhalb eines vorbestimmten Frequenzbereichs abgeschwächt oder gegebenenfalls vollständig gedämpft werden. Gleichzeitig werden Gleichanteile des empfangenen Signals unterdrückt. Das Verfahren umfasst ferner einen Schritt zum Berechnen eines ersten Winkelwerts basierend auf dem ersten gefilterten Signal. Weiterhin umfasst das Verfahren einen Schritt zum Anwenden einer kombinierten Tiefpass- und Bandpassfilterung auf das empfangene Signal von dem Drehwinkelgeber. Hierdurch wird ein zweites gefiltertes Signal erhalten, wobei Frequenzanteile oberhalb einer vorbestimmten Grenzfrequenz abgeschwächt oder gegebenenfalls vollständig gedämpft werden. Anschließend wird ein zweiter Winkelwert basierend auf dem zweiten gefilterten Signal berechnet. Das Verfahren umfasst darüber hinaus einen Schritt zum Vergleichen des berechneten ersten Winkelwertes mit dem berechneten zweiten Winkelwert.

### Vorteile der Erfindung

Der vorliegenden Erfindung liegt die Idee zugrunde, ein von einem Drehwinkelgeber bereitgestelltes Signal in zwei unterschiedlichen Signalpfaden zu verarbeiten und anschließend die Ergebnisse miteinander zu vergleichen. Dabei ist die Verarbeitung in einem ersten Signalpfad auf eine möglichst präzise Ermittlung des Drehwinkels ausgelegt, während die Verarbeitung in dem zweiten Signalpfad für eine Fehlerdetektion optimiert ist. Durch die Anwendung eines Bandpassfilters in dem ersten Signalpfaden werden dabei mögliche Störungen durch Gleichanteile bzw. einen Offset ausgeblendet. Somit kann die Bestimmung des Drehwinkels verbessert werden. In dem weiteren Signalpfaden dagegen wird durch die Einbeziehung des Gleichanteils zwar die Ermittlungen des Drehwinkels erschwert, doch gleichzeitig steht dieser Gleichanteil für eine mögliche Fehlerdetektion weiterhin zur Verfügung und kann in die entsprechende Verarbeitung mit einbezogen werden.

Neben der Anwendung von unterschiedlichen Filtereigenschaften in den beiden Signalpfaden können die Signalpfade darüber hinaus noch weiter auf die jeweiligen Anwendungsfälle, d.h. Winkelgüte in dem ersten Signalpfad und Diagnostizierbarkeit von Fehlern in dem zweiten Signalpfad optimiert werden. Insbesondere kann dabei in dem ersten Signalpfad eine Verarbeitung mit einer höheren Genauigkeitsanforderung als in dem zweiten Signalpfad implementiert werden.

Gemäß einer Ausführungsform umfasst die erste Berechnungseinheit eine erste Abtasteinrichtung, die dazu ausgelegt ist, das erste gefilterte Signal mit einer ersten Abtastfrequenz abzutasten. Weiterhin umfasst die zweite Berechnungseinheit eine zweite Abtasteinrichtung, die dazu ausgelegt ist, das zweite gefilterte Signal mit einer zweiten Abtastfrequenz abzutasten. Die erste Berechnungseinheit berechnet dabei den ersten Winkelwert basierend auf dem abgetasteten ersten gefilterten Signal. Die zweite Berechnungseinheit berechnet den zweiten Winkelwert basierend auf dem abgetasteten zweiten gefilterten Signal. Auf diese Weise ist es möglich, die Abtastrate für das Signal in jedem Signalpfad auf die entsprechende Anwendung, d.h. für die Optimierung bezüglich Winkelgüte bzw. Diagnostizierbarkeit von Fehlern anzupassen.

Gemäß einer weiteren Ausführungsform ist die erste Abtastfrequenz größer als die zweite Abtastfrequenz. Diese Weise kann für eine präzise Bestimmung des Winkels die Verarbeitung mit einer hohen Abtastrate, d.h. mit einer großen Anzahl von abgetasteten Werten ausgeführt werden. Gleichzeitig kann die Fehlerdiagnose mit einer geringeren Abtastrate und somit mit niedrigeren Ansprüchen an die Rechenleistung ausgeführt werden.

Gemäß einer weiteren Ausführungsform umfasst die erste Abtasteinrichtung einen Delta-Sigma-Analog-Digital-Wandler (DS-ADC). Insbesondere kann der DS-ADC dabei in einem differentiellen Modus betrieben werden. Weiterhin ermöglichen DS-ADC eine sehr schnelle Abtastung bis hin zu beispielsweise 3 µs. Somit können für eine sehr präzise Winkelbestimmung sehr viele Abtastwerte bereitgestellt werden.

Gemäß einer weiteren Ausführungsform umfasst die zweite Abtasteinrichtung einen Successive-Approximation-Register-Analog-Digital-Wandler (SAR-ADC). Insbesondere kann der SAR-ADC dabei in einem Single-Ended-Modus betrieben werden. Auf diese Weise können die Spannungswerte des bereitgestellten Signals vom Drehwinkelgeber absolut erfasst werden. Dies ist für eine elektrische Diagnose, wie zum Beispiel eine Erkennung von Kurzschlüssen oder Unterbrechungen, vorteilhaft.

Gemäß einer weiteren Ausführungsform verarbeitet die erste Verarbeitungseinheit das Signal von dem Drehwinkelgeber basierend auf einer Spannungsdifferenz zwischen einer ersten Signalleitungen und einer zweiten Signalleitung. Ferner verarbeitet die zweite Bearbeitungseinheit das Signal von dem Drehwinkelgeber basierend auf einer ersten Spannung zwischen der ersten Signalleitung und einem Bezugspotenzial und einer zweiten Spannung zwischen der zweiten Signalleitung und dem Bezugspotenzial. Hierdurch kann das Winkelsignal in dem ersten Signalpfad ohne störenden Gleichanteil bestimmt werden. Ferner steht in dem zweiten Signalpfad der Gleichanteil für die Fehlerdiagnose zur Verfügung.

Gemäß einem weiteren Aspekt schafft die vorliegende Erfindung ein Antriebssystem mit einem elektrischen Motor, einem Drehwinkelgeber und einer erfindungsgemäßen Vorrichtung zur Auswertung des Signals von dem Drehwinkelgeber. Der elektrische Motor ist dazu ausgelegt, eine Antriebsachse anzutreiben. Der Drehwinkelgeber ist mit der Antriebsachse des elektrischen Antriebs gekoppelt. Weiterhin ist der Drehwinkelgeber dazu ausgelegt, ein elektrisches Signal auszugeben, das zu der relativen Lage der Antriebsachse korrespondiert.

Gemäß einer Ausführungsform des Antriebssystems umfasst der Drehwinkelgeber einen Resolver. Resolver liefern innerhalb einer Umdrehung ein absolutes Winkelsignal und müssen daher nach dem Einschalten nicht referenziert werden. Daher eignen sich Resolver sehr gut als Drehwinkelgeber.

Gemäß einer Ausführungsform des Verfahrens zur Auswertung eines Signals empfängt der Schritt zum Empfangen eines Signals von dem Drehwinkelgeber zwei gegeneinander phasenversetzte Signale von einem Resolver.

Weitere Vorteile und Ausführungsformen ergeben sich aus der nachfolgenden Beschreibung unter Bezug auf die beigefügten Zeichnungen.

### Kurze Beschreibung der Zeichnungen

Es zeigen:
- Figur 1:: eine schematische Darstellung eines elektrischen Antriebssystems gemäß einer Ausführungsform;
- Figur 2:: eine schematische Darstellung einer Vorrichtung zur Verarbeitung eines Winkelsignals gemäß einer Ausführungsform; und
- Figur 3:: eine schematische Darstellung eines Ablaufdiagramms, wie es einem Verfahren gemäß einer Ausführungsform zugrunde liegt.

### Beschreibung von Ausführungsformen

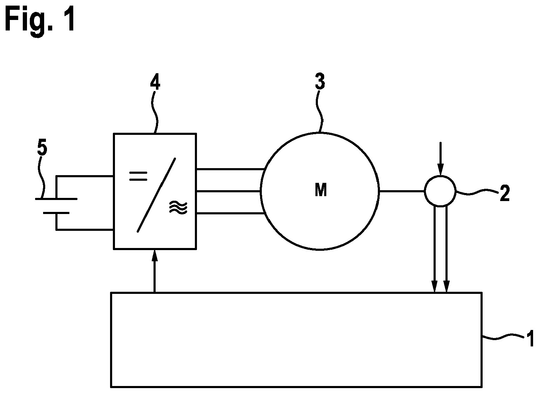

Figur 1 zeigt eine schematische Darstellung eines elektrischen Antriebssystems gemäß einer Ausführungsform. Eine elektrische Maschine 3 wird von einer elektrischen Energiequelle 5 über einen Stromrichter 4 gespeist. Beispielsweise kann es sich bei der elektrischen Energiequelle 5 um eine Traktionsbatterie eines Elektrofahrzeugs handeln. Bei der elektrischen Maschine 3 kann es sich beispielsweise um eine permanent erregte Synchronmaschine, eine elektrische erregte Synchronmaschine oder aber auch um eine Asynchronmaschine handeln. Grundsätzlich sind darüber hinaus auch andere elektrische Maschinen möglich. Die hier dargestellte Ausführungsform einer dreiphasigen elektrischen Maschine 3 stellt dabei nur eine beispielhafte Ausführungsform dar. Darüber hinaus sind auch elektrische Maschinen mit einer von drei abweichenden Anzahl von Phasen möglich. Der Stromrichter 4 konvertiert die von der elektrischen Energiequelle 5 bereitgestellte elektrische Energie und stellt die konvertierte elektrische Energie zur Ansteuerung der elektrischen Maschine 3 bereit. Die Ansteuerung der elektrischen Maschine 3 kann dabei basierend auf Vorgaben bzw. Steuersignalen von der Steuervorrichtung 1 erfolgen. Darüber hinaus kann beim Abbremsen der elektrischen Maschine 3 auch kinetische Energie durch die elektrische Maschine 3 in elektrische Energie umgewandelt werden und diese elektrische Energie über den Stromrichter 4 in einen elektrischen Energiespeicher der Energiequelle 5 eingespeist werden.

Für die Regelung einer permanent- oder elektrisch erregten Synchronmaschine ist dabei die Kenntnis über die Lage des Rotors in dieser Maschine erforderlich. Ferner ist für die Regelung von Asynchronmaschinen die Kenntnis der elektrischen Frequenz einer solchen Maschine notwendig. Hierzu kann die elektrische Maschine 3 mit einem Drehwinkelgeber 2 gekoppelt werden. Beispielsweise kann der Drehwinkelgeber 2 mit der Antriebsachse der elektrischen Maschine 3 gekoppelt werden. Beispielsweise sind zur Bestimmung der Rotorlage und/oder der elektrischen Frequenz der Maschine 3 Sensoren auf Basis des Wirbelstrom-Effekts, digitale Winkelgeber oder sogenannte und Resolver möglich.

In einem Resolver sind in der Regel in einem Gehäuse zwei um 90° elektrisch versetzte Statorwicklungen angeordnet, die einen in dem Gehäuse gelagerten Rotor mit einer Rotorwicklung umschließen. Grundsätzlich sind verschiedene Alternativen zur Ermittlung der Winkellage möglich, von denen nachfolgend exemplarisch eine Möglichkeit beschrieben wird. Beispielsweise kann die Rotorwicklung des Resolvers mit einer sinusförmigen Wechselspannung angeregt werden. Die Amplituden der in den beiden Statorwicklungen des Resolvers induzierten Spannungen sind dabei abhängig von der Winkellage des Rotors und entsprechen dem Sinus und dem Kosinus der Winkellage des Rotors. Somit kann die Winkellage des Rotors aus dem Arkustangens (arctan) der Signale der beiden Statorwicklungen des Resolvers berechnet werden.

Um bei der Signalverarbeitung und insbesondere auch bei der Regelung eines elektrischen Antriebs eine ausreichende Sicherheit gewährleisten zu können, ist es wünschenswert, die von einem Drehwinkelgeber, wie zum Beispiel einem Resolver, bereitgestellten Signale verifizieren zu können und dabei gegebenenfalls auch Fehler und Störungen in den Signalen diagnostizieren zu können. Beispielsweise kann ein elektrisches Antriebssystem eine Schnittstelle aufweisen, über die Steuersignale zu der Leistungselektronik übertragen werden können und Sensorsignale, wie zum Beispiel auch die Ausgangssignale eines Drehwinkelgebers, bereitgestellt werden. Neben der reinen Auswertung dieser Signale von dem Drehwinkelgeber können diese Signale darüber hinaus auch auf Plausibilität und Fehler hin überprüft werden.

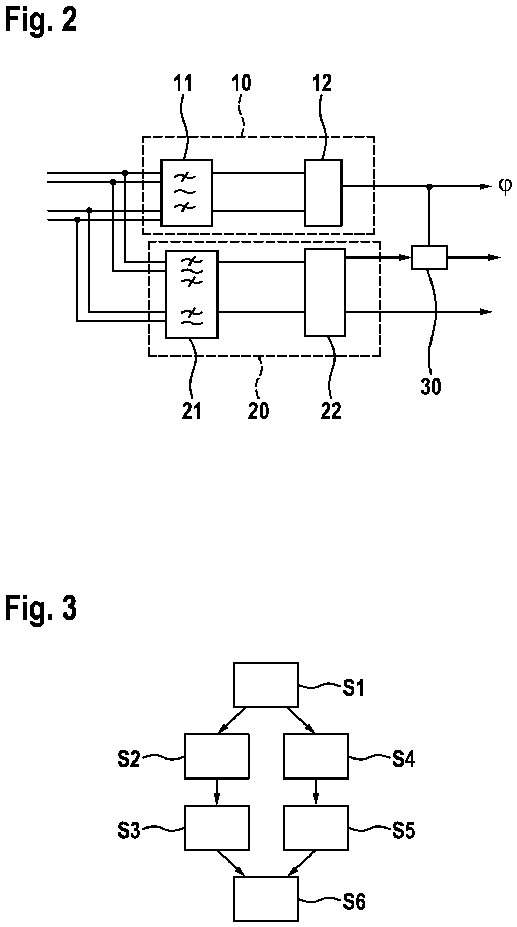

Figur 2 zeigt eine schematische Darstellung einer Vorrichtung zur Auswertung eines Signals von einem Drehwinkelgeber gemäß einer Ausführungsform. Die Vorrichtung zur Auswertung eines Signals von einem Drehwinkelgeber umfasst dabei eine erste Verarbeitungseinheit 10, eine zweite Verarbeitungseinheit 20 sowie eine Analyseeinrichtung 30. Auch wenn die Auswertung der Signale von einem Drehwinkelgeber in dem nachfolgenden Ausführungsbeispiel im Zusammenhang mit zwei Ausgangssignalen von einem Resolver beschrieben wird, so stellt diese beispielhafte Darstellung keine Einschränkung der vorliegenden Erfindung dar. Vielmehr kann die erfindungsgemäße Auswertung der Signale von einem Drehwinkelgeber auch auf Ausgangssignale von anderen Drehwinkelgebern oder auch auf weitere winkelbezogene Signale angewendet werden. Darüber hinaus ist die erfindungsgemäße Auswertung der Signale auch auf Signale von anderen Sensoren anwendbar. Die Anwendung ist hierbei nicht zwangsläufig auf Winkelsignale limitiert.

Die Vorrichtung zur Auswertung eines Signals von einem Drehwinkelgeber empfängt dabei beispielsweise die Rohsignale von einem Drehwinkelgeber. Zum Beispiel kann es sich bei diesen Rohsignalen um das Sinus-Signal und das Kosinus-Signal von einem Resolver handeln. Diese Signale können beispielsweise über eine standardisierte Schnittstelle oder eine beliebige andere Verbindung bereitgestellt werden. Die Vorrichtung zur Auswertung des Signals von dem Drehwinkelgeber wertet daraufhin, wie im Nachfolgenden näher erläutert, die Signale von dem Drehwinkelgeber in zwei verschiedenen Verfahren getrennt aus. Dabei ist die eine Auswertung der Signale von dem Drehwinkelgeber auf eine hohe Güte des rekonstruierten Winkelsignals ausgerichtet. Die andere Auswertung der Signale von dem Drehwinkelgeber ist dagegen auf eine möglichst effiziente und aussagekräftige Diagnostizierbarkeit von möglichen Fehlern ausgerichtet.

In dem ersten Signalpfad erfolgt die Verarbeitung der Signale von dem Drehwinkelgeber mit dem Ziel einer möglichst hohen Winkelgüte für die weitere Signalverarbeitung bzw. Regelung. Wird jedes Signal (zum Beispiel das Sinus-Signal und das Kosinus-Signal eines Resolvers) jeweils über zwei Signalleitungen übertragen, so kann in dem ersten Verarbeitungspfad beispielsweise eine differentielle Messung der Spannung zwischen diesen beiden Signalleitungen erfolgen. Eine solche Übertragung eines Signals über zwei Signalleitungen ermöglicht dabei eine Übertragung des Signals frei von einem Bezugspotential. Durch eine solche differentielle Messung zwischen den beiden Signalleitungen eines Signals von dem Drehwinkelgeber werden somit Gleichtaktstörungen, wie zum Beispiel ein Offset auf den Signalleitungen, unterdrückt, so dass derartige Störungen keinen Einfluss auf die weitere Auswertung des Winkelsignals haben. Weiterhin können die Signale von dem Drehwinkelgeber in der ersten Verarbeitungseinheit 10 mittels eines Bandpassfilters 11 gefiltert werden. Ein solches Bandpassfilter dämpft bzw. unterdrückt dabei Frequenzanteile in dem Signal von dem Drehwinkelgeber, welche unterhalb einer ersten Frequenz bzw. oberhalb einer zweiten Grenzfrequenz liegen. Frequenzanteile zwischen der ersten und der zweiten Grenzfrequenz werden dagegen nicht oder nur sehr gering gedämpft. Insbesondere kann durch ein solches Bandpassfilter 11 auch der Gleichanteil in dem Signal von dem Drehwinkelgeber unterdrückt werden. Liegen die Signale von dem Drehwinkelgeber zunächst in analoger Form vor, so können die Signale in der ersten Verarbeitungseinheit 10 beispielsweise auch von einem Analog-Digital-Wandler abgetastet und digitalisiert werden, der in einem differentiellen Modus betrieben wird. Beispielsweise kann es sich bei einem solchen Analog-Digital-Wandler um einen Delta-Sigma-Analog-Digital-Wandler (DS-ADC) handeln. Derartige Analog-Digital-Wandler ermöglichen eine sehr schnelle Abtastung von Eingangssignalen. Beispielsweise können die Eingangssignale mit einer Abtastrate von bis zu 3 µs abgetastet werden. Gleichzeitig kann durch derartige Analog-Digital-Wandler in einem differentiellen Modus ein Gleichspannungsoffset in dem Signal von dem Drehwinkelgeber unterdrückt werden. Andere Analog-Digital-Wandler, insbesondere Analog-Digital-Wandler mit einem differentiellen Betriebsmodus sind ebenso möglich.

Anschließend erfolgt in der ersten Verarbeitungseinheit 10 durch eine erste Berechnungseinheit 12 eine Auswertung der zuvor beschriebenen aufbereiteten Signale von dem Drehwinkelgeber zur Bestimmung eines ersten Winkelwerts. Diese erste Berechnungseinheit 12 verarbeitet dabei die bandpassgefilterten digitalisierten Signale von dem Drehwinkelgeber mit einer hohen Verarbeitungsgeschwindigkeit, also in einem sehr hoch getakteten Rechenraster. Die Berechnung des ersten Winkelwerts durch die erste Berechnungseinheit 12 erfolgt dabei mittels konventioneller, bekannter Algorithmen zur Rekonstruktion des Winkelwerts aus den Signalen des Drehwinkelgebers. Alternativ können selbstverständlich auch neuartige Algorithmen zur Rekonstruktion des Drehwinkels aus den Signalen des Drehwinkelgebers angewendet werden.

Durch die zuvor beschriebene Verarbeitung und Filterung der Signale von dem Drehwinkelgeber und die schnell getaktete Berechnung des Winkelwerts in der ersten Verarbeitungseinheit 10 kann somit ein Winkelsignal mit einer hohen Güte bereitgestellt werden. Die Verarbeitung und insbesondere die Filterung ermöglicht dabei das Ausblenden eines Gleichspannungsanteils in dem Signal von dem Drehwinkelgeber, so dass das rekonstruierte Winkelsignal nicht durch derartige Gleichspannungsanteile beeinflusst bzw. verfälscht wird.

Parallel zu der Berechnung des Winkelwerts in der ersten Verarbeitungseinheit 10 erfolgt gleichzeitig auch eine Berechnung eines zweiten Winkelwerts durch eine zweite Verarbeitungseinheit 20. Diese zweite Verarbeitungseinheit 20 kann dabei beispielsweise ein durch zwei Signalleitungen bereitgestelltes Signal von einem Drehwinkelgeber mittels einer Single-Ended-Messung zwischen jedem der Signalleitungen und einem Bezugspotential separat erfassen. Durch diese getrennte Erfassung der beiden Spannungen auf den zwei Signalleitungen ist beispielsweise eine elektrische Diagnose möglich, die die Detektion einer Gleichtaktstörung in den Eingangssignalen ermöglicht. Auch kann auf diese Weise sehr einfach ein Kurzschluss einer Signalleitung mit Masse oder einem anderen Spannungspotential detektiert werden. Die zweite Verarbeitungseinheit 20 umfasst ferner ein kombiniertes Tiefpass- und Bandpassfilter 21. Ein derartiges Tiefpass- und Bandpassfilter 21 dämpft bzw. unterdrückt dabei Frequenzanteile oberhalb einer vorgegebenen Grenzfrequenz. Frequenzanteile unterhalb dieser Grenzfrequenz werden dagegen nicht oder nur in sehr geringem Maße gedämpft. Insbesondere ist ein solches Tiefpass- und Bandpassfilter 21 in der Lage, Gleichspannungsanteile durchzulassen, so dass diese Gleichspannungsanteile in einer nachfolgenden Auswertung detektiert werden können. Dabei kann die Tiefpasskomponente des kombinierten Tiefpass- und Bandpassfilters 21 auch eine Grenzfrequenz aufweisen, die unterhalb der unteren Grenzfrequenz der Bandpasskomponente des kombinierten Tiefpass-und Bandpassfilters 21 liegt. Auf diese Weise ist es auch möglich, Frequenzanteile, die zwischen der Grenzfrequenz der Tiefpasskomponente und der unteren Grenzfrequenz der Bandpasskomponente liegen, zu dämpfen.

Die Grenzfrequenzen dieses kombinierten Tiefpass- und Bandpassfilters 21, wie auch die erste und zweite Grenzfrequenz des Bandpassfilters 11 der ersten Verarbeitungseinheit 10 können dabei unter Berücksichtigung der systemrelevanten Komponenten fest vorgegeben sein. Alternativ ist es auch möglich, die jeweiligen Grenzfrequenzen zu variieren bzw. gegebenenfalls dynamisch anzupassen.

Darüber hinaus ist es auch möglich, dass das kombinierte Tiefpass- und Bandpassfilter 21 einen Gleichspannungsanteil nicht vollständig ungehindert passieren lässt, sondern dieser Gleichspannungsanteil eine gewisse Dämpfung erfährt. Insbesondere kann das Tiefpass- und Bandpassfilter 21 derart ausgelegt sein, dass die Dämpfung für einen Gleichspannungsanteil höher ist als die Dämpfung für das Nutzsignal, das die Bandpasskomponente des kombinierten Tiefpass- und Bandpassfilters 21 passiert. Beispielsweise kann es sich bei dem Nutzsignal um ein Signal mit einer Frequenz von ca. 10 kHz handeln. Durch eine Dämpfung des Gleichspannungsanteils in dem kombinierten Tiefpass- und Bandpassfilter 21 kann dabei beispielsweise die Nebenschlussfestigkeit des Systems gesteigert werden.

Liegen die Signale von dem Drehwinkelgeber in analoger Form vor, so können die Signale auch in der zweiten Verarbeitungseinheit 20 durch einen Analog-Digital-Wandler in Digitalsignale konvertiert werden. Hierzu ist in der zweiten Verarbeitungseinheit 20 insbesondere ein sogenannter Successive-Approximation-Register-Analog-Digital-Wandler (SAR-ADC) möglich. Darüber hinaus sind selbstverständlich auch andere Analog-Digital-Wandler möglich. Wird der Analog-Digital-Wandler dabei in einem Single-Ended-Modus betrieben, können dabei insbesondere die absoluten Spannungswerte auf den einzelnen Leitungen ermittelt werden, auf denen das Rohwinkelsignal von dem Drehwinkelgeber bereitgestellt wird. Hierdurch ist eine elektrische Diagnose, insbesondere auch eine Diagnose von Spannungsoffsets möglich. In dem zweiten Signalpfad der zweiten Verarbeitungseinheit 20 ist dabei für die Fehlerdiagnose eine deutlich langsamere Verarbeitung und Digitalisierung der Winkellagesignale ausreichend, als dies für die Verarbeitung durch die erste Verarbeitungseinheit 10 erforderlich ist. Auf diese Weise ist insbesondere eine Verwendung von robusten, kostengünstigen Bauelementen möglich. Darüber hinaus kann in der zweiten Verarbeitungseinheit 20 auch die Auswahl der Bauelemente sowie der Auswertealgorithmen auf die Diagnostizierbarkeit von Störungen bzw. Fehlern optimiert werden, ohne dass hierzu eine besonders hohe Signalverarbeitungsgeschwindigkeit erforderlich wäre.

Die zweite Verarbeitungseinheit 20 kann somit bereits durch Auswertung der Signale von dem Drehwinkelgeber auf eine mögliche Störung des Drehwinkelgebers bzw. auf einen Fehler in den Signalleitungen zwischen Drehwinkelgeber und der Schaltungsanordnung für die Auswertung der Drehwinkelgebersignale schließen. Weiterhin können die Winkelsignale der ersten Verarbeitungseinheit 10 und der zweiten Verarbeitungseinheit 20 in einer Analysevorrichtung 30 miteinander verglichen werden. Stellt die Verarbeitungseinheit 30 dabei eine Diskrepanz zwischen den beiden berechneten Winkelwerten fest, so kann daraus ebenfalls auf einen Fehler bei der Verarbeitung der Winkelsignale geschlossen werden. Die Ergebnisse dieses Vergleichs der beiden Winkelwerte, sowie gegebenenfalls einen durch die zweiten Verarbeitungseinheit 20 detektierten Fehler können dabei gemeinsam oder getrennt bereitgestellt werden, um hieraus ein mögliches Fehlersignal zu generieren. Dieses Fehlersignal kann dabei von einer Motorsteuerung oder einer übergeordneten Systemüberwachungskomponente erfasst und ausgewertet werden.

Figur 3 zeigt eine schematische Darstellung eines Verfahrens zur Auswertung eines Signals in einem Drehwinkelgeber. In einem ersten Schritt S1 wird ein Signal von einem Drehwinkelgeber empfangen. In einem Schritt S2 wird auf dieses Signal von dem Drehwinkelgeber eine Bandpassfilterung angewendet. Durch diese Bandpassfilterung wird ein erstes gefiltertes Signal erhalten. In diesem ersten gefilterten Signal sind Frequenzanteile unterhalb und oberhalb eines vorbestimmten Frequenzbereichs abgeschwächt. Insbesondere wird auch ein Gleichanteil des empfangen Signals durch diese Bandpassfilterung unterdrückt. Basierend auf diesem ersten gefilterten Signal kann in Schritt S3 ein erster Winkelwert berechnet werden.

In Schritt S4 wird ferner auf das empfangene Signal von dem Drehwinkelgeber eine kombinierte Tiefpass- und Bandpassfilterung angewendet. Insbesondere werden durch diese kombinierte Tiefpass- und Bandpassfilterung Frequenzanteile oberhalb einer vorbestimmten Grenzfrequenz abgeschwächt. Ferner könne auch Frequenzanteile zwischen der Grenzfrequenz der Tiefpasskomponente des Tiefpass- und Bandpassfilters und der unteren Grenzfrequenz der Bandpasskomponente der Tiefpass- und Bandpassfilters gedämpft werden. Darüber hinaus kann auch ein möglicher Gleichanteil in dem Signal von dem Drehwinkelgeber gedämpft werden. Ein möglicher Gleichanteil wird dabei zwar abgeschwächt, jedoch im Gegensatz zu der Bandpassfilterung in Schritt S2 nicht vollständig gedämpft. Das durch die kombinierte Tiefpass- und Bandpassfilterung gefilterte Signal wird als zweites gefiltertes Signal ausgegeben. Basierend auf diesem zweiten gefilterten Signal erfolgt daraufhin eine Berechnung eines zweiten Winkelwerts in Schritt S5. In Schritt S6 kann darauf der berechnete erste Winkelwert und der berechnete zweite Winkelwert miteinander verglichen werden. Aus diesem Vergleich kann daraufhin gegebenenfalls auf einen möglichen Fehler in dem Drehwinkelgeber oder im Signalverlauf vom Drehwinkelgeber zur Auswerteschaltung geschlossen werden.

Insbesondere kann es sich bei dem Signal von dem Drehwinkelgeber um zwei gegeneinander phasenversetzte Signale eines Resolvers handeln. Jedes dieser Signale von dem Resolver, oder auch von einem anderen Drehwinkelgeber kann dabei über zwei voneinander elektrisch isolierten Adern übertragen werden. Auf diese Weise ist eine bezugspotentialfreie Übertragung des Signals möglich, das aufgrund des induktiven Prinzips des Resolvers bezugspotentioalfrei bereitgestellt werden kann. Insbesondere ist auch auf diese Weise eine galvanische Trennung zwischen Bezugspotential und dem Signal von dem Drehwinkelgeber möglich.

Zusammenfassend betrifft die vorliegende Erfindung eine zweifache Auswertung von Signalen von einem Drehwinkelgeber. Dabei wird in einem ersten Signalpfad das Signal von dem Drehwinkelgeber in Hinsicht auf möglichst hohe Winkelgüte des zu berechnenden Winkelsignals verarbeitet. Ein zweiter Signalpfad zur Verarbeitung des Signals von dem Drehwinkelgeber ist dagegen auf eine möglichst gute Diagnostizierbarkeit von Fehlern optimiert.

## Patentansprüche

1. Vorrichtung zur Auswertung eines Signals von einem Drehwinkelgeber (2) zum Schließen auf einen möglichen Fehler, mit:
einer ersten Verarbeitungseinheit (10), mit:
einem Bandpassfilter (11), die dazu ausgelegt sind, Frequenzanteile unterhalb und oberhalb eines vorbestimmten Frequenzbereichs abzuschwächen und einen Gleichanteil des Signals von dem Drehwinkelgeber zu unterdrücken, und ein erstes gefiltertes Signal bereitzustellen; und
einer ersten Berechnungseinheit (12), die dazu ausgelegt ist, basierend auf dem ersten gefilterten Signal einen ersten Winkelwert zu berechnen, um ein Winkelsignal mit einer hohen Güte bereitzustellen;
einer zweiten Verarbeitungseinheit (20), mit
einem parallel operierenden, kombinierten Tief- und Bandpassfilter (21), das dazu ausgelegt ist, Frequenzanteile oberhalb einer vorbestimmten Grenzfrequenz abzuschwächen, und ein zweites gefiltertes Signal bereitzustellen; und
einer zweiten Berechnungseinheit (22), die dazu ausgelegt ist, basierend auf dem zweiten gefilterten Signal einen zweiten Winkelwert zu berechnen, um eine möglichst effiziente und aussagekräftige Diagnostizierbarkeit von möglichen Fehlern bereitzustellen; und
einer Analyseeinrichtung (30), die dazu ausgelegt ist, den berechneten ersten Winkelwert und den berechneten zweiten Winkelwert zu vergleichen und aus einer Diskrepanz zwischen dem berechneten ersten Winkelwert und dem berechneten zweiten Winkelwert auf einen möglichen Fehler zu schließen.

2. Vorrichtung nach Anspruch 1, wobei die erste Verarbeitungseinheit (10) eine erste Abtasteinrichtung umfasst, die dazu ausgelegt ist, das erste gefilterte Signal mit einer ersten Abtastfrequenz abzutasten;
und die zweite Verarbeitungseinheit (20) eine zweite Abtasteinrichtung umfasst, die dazu ausgelegt ist, das zweite gefilterte Signal mit einer zweiten Abtastfrequenz abtasten;
und wobei die erste Berechnungseinheit (12) den ersten Winkelwert basierend auf dem abgetasteten ersten gefilterten Signal berechnet und in die zweite Berechnungseinheit (22)den zweiten Winkelwert basierend auf dem abgetasteten zweiten gefilterten Signal berechnet.

3. Vorrichtung nach Anspruch 2, wobei die erste Abtastfrequenz größer ist als die zweite Abtastfrequenz.

4. Vorrichtung nach Anspruch 2 oder 3, wobei die erste Abtasteinrichtung einen Delta-Sigma-Analog-Digital-Wandler, DS-ADC, umfasst.

5. Vorrichtung nach einem der Ansprüche 2 bis 4, wobei die zweite Abtasteinrichtung einen Successive-Approximation- Register-Analog-Digital-Wandler, SAR-ADC, umfasst.

6. Vorrichtung nach einem der Ansprüche 1 bis 5, wobei die erste Berechnungseinheit (12) das Signal von dem Drehwinkelgeber (2) basierend auf einer Spannungsdifferenz zwischen einer ersten Signalleitungen und einer zweiten Signalleitung verarbeitet; und
die zweite Bearbeitungseinheit (22) das Signal von dem Drehwinkelgeber (2) basierend auf einer ersten Spannung zwischen der ersten Signalleitung und einem Bezugspotenzial und einer zweiten Spannung zwischen der zweiten Signalleitung und dem Bezugspotenzial verarbeitet.

7. Antriebssystem, mit:
einem elektrischen Motor (3), der dazu ausgelegt ist eine Antriebsachse anzutreiben;
einem Drehwinkelgeber (2), der mit der Antriebsachse des elektrischen Motors (3) gekoppelt ist, und der dazu ausgelegt ist ein elektrisches Signal auszugeben, das zu der relativen Lage der Antriebsachse korrespondiert;
einer Vorrichtung zur Auswertung eines Signals eines Drehwinkelgebers (2) der vorstehenden Ansprüche 1 bis 6.

8. Antriebssystem nach Anspruch 7, wobei der Drehwinkelgeber (2) einen Resolver umfasst.

9. Verfahren zur Auswertung eines Signals von einem Drehwinkelgeber 2) zum Schließen auf einen möglichen Fehler, mit den Schritten:
Empfangen (S1) eines Signals von dem Drehwinkelgeber (2);
Anwenden (S2) einer Bandpass-Filterung auf das empfangene Signal von dem Drehwinkelgeber, um ein erstes gefiltertes Signal zu erhalten, wobei Frequenzanteile unterhalb und oberhalb eines vorbestimmten Frequenzbereichs abgeschwächt werden und ein Gleichanteil des empfangenen Signals unterdrückt wird;
Berechnen (S3) eines ersten Winkelwerts basierend auf dem ersten gefilterten Signal, um ein Winkelsignal mit einer hohen Güte bereitzustellen;
Anwenden (S4) einer kombinierten, parallel operierenden Tiefpass-und Bandpass-Filterung auf das empfangene Signal von dem Drehwinkelgeber, um ein zweites gefilterte Signal zu erhalten, wobei Frequenzanteile oberhalb einer vorbestimmten Grenzfrequenz abgeschwächt werden,
Berechnen (S5) eines zweiten Winkelwerts basierend auf dem zweiten gefilterten Signal, um eine möglichst effiziente und aussagekräftige Diagnostizierbarkeit von möglichen Fehlern bereitzustellen; und
Vergleichen (S6) des berechneten ersten Winkelwerts mit dem berechneten zweiten Winkelwert;
Schließen aus einer Diskrepanz zwischen dem berechneten ersten Winkelwert und dem berechneten zweiten Winkelwert auf einen möglichen Fehler.

10. Verfahren nach Anspruch 9, wobei der Schritt (S1) zum Empfang eines Signals von dem Drehwinkelgeber (2) zwei gegeneinander phasenversetzte Signale von einem Resolver empfängt.

## Claims

1. Apparatus for evaluating a signal of a rotational angle sensor (2) for deducing a possible error,
having:
a first processing unit (10), having:
a bandpass filter (11) which is configured to attenuate frequency components below and above a predetermined frequency range and to suppress a DC component of the signal of the rotational angle sensor, and to provide a first filtered signal; and
a first calculation unit (12), which is configured to calculate a first angle value on the basis of the first filtered signal in order to provide an angle signal having a high quality;
a second processing unit (20), having
a combined lowpass and bandpass filter (21), which operates in parallel and which is configured to attenuate frequency components above a predetermined cutoff frequency, and to provide a second filtered signal; and
a second calculation unit (22), which is configured to calculate a second angle value on the basis of the second filtered signal in order to provide maximally efficient and informative diagnosability of possible errors; and
an analysis device (30), which is configured to compare the calculated first angle value with the calculated second angle value and to deduce a possible error from a discrepancy between the calculated first angle value and the calculated second angle value.

2. Apparatus according to Claim 1, wherein the first processing unit (10) comprises a first sampling device, which is configured to sample the first filtered signal with a first sampling frequency;
and the second processing unit (20) comprises a second sampling device, which is configured to sample the second filtered signal with a second sampling frequency;
and wherein the first calculation unit (12) calculates the first angle value on the basis of the sampled first filtered signal and the second calculation unit (22) calculates the second angle value on the basis of the sampled second filtered signal.

3. Apparatus according to Claim 2, wherein the first sampling frequency is greater than the second sampling frequency.

4. Apparatus according to Claim 2 or 3, wherein the first sampling device comprises a delta-sigma analog-to-digital converter, DS-ADC.

5. Apparatus according to one of Claims 2 to 4, wherein the second sampling device comprises a successive approximation register analog-to-digital converter, SAR-ADC.

6. Apparatus according to one of Claims 1 to 5, wherein the first calculation unit (12) processes the signal of the rotational angle sensor (2) on the basis of a voltage difference between a first signal line and a second signal line; and
the second processing unit (22) processes the signal of the rotational angle sensor (2) on the basis of a first voltage between the first signal line and a reference potential and a second voltage between the second signal line and the reference potential.

7. Drive system, having:
an electric motor (3), which is configured to drive a drive shaft;
a rotational angle sensor (2), which is coupled to the drive shaft of the electric motor (3) and is configured to deliver an electrical signal which corresponds to the relative position of the drive shaft;
an apparatus for evaluating a signal of a rotational angle sensor (2) of the preceding Claims 1 to 6.

8. Drive system according to Claim 7, wherein the rotational angle sensor (2) comprises a resolver.

9. Method for evaluating a signal of a rotational angle sensor (2) for deducing a possible error, having the steps:
receiving (S1) a signal of the rotational angle sensor (2) ;
applying (S2) bandpass filtering to the received signal of the rotational angle sensor in order to obtain a first filtered signal, frequency components below and above a predetermined frequency range being attenuated and a DC component of the received signal being suppressed;
calculating (S3) a first angle value on the basis of the first filtered signal in order to provide an angle signal having a high quality;
applying (S4) combined lowpass and bandpass filtering, which operates in parallel, to the received signal of the rotational angle sensor in order to obtain a second filtered signal, frequency components above a predetermined cutoff frequency being attenuated,
calculating (S5) a second angle value on the basis of the second filtered signal in order to provide maximally efficient and informative diagnosability of possible errors; and
comparing (S6) the calculated first angle value with the calculated second angle value;
deducing a possible error from a discrepancy between the calculated first angle value and the calculated second angle value.

10. Method according to Claim 9, wherein the step (S1) of receiving a signal of the rotational angle sensor (2) receives two mutually phase-shifted signals from a resolver.

## Revendications

1. Appareil destiné à mesurer un signal d'un capteur de déplacement angulaire (2) afin de déduire une anomalie possible, doté :
d'une première unité de traitement (10), dotée :
d'un filtre passe-bande (11), disposé de façon à atténuer les composantes de fréquences supérieures et inférieures à un intervalle de fréquences prédéfini et à supprimer une composante continue du signal du capteur de déplacement angulaire, et à produire un premier signal filtré ; et
d'une première unité de calcul (12), disposée de façon à calculer une première valeur angulaire basée sur le premier signal filtré, afin de produire un signal angulaire de haute qualité ;
d'une deuxième unité de traitement (20), dotée d'un filtre combiné passe-bande et passe-bas (21) opérant en parallèle, disposé de façon à atténuer les composantes de fréquences supérieures à une fréquence limite prédéfinie et à produire un deuxième signal filtré ; et
d'une deuxième unité de calcul (22), disposée de façon à calculer une deuxième valeur angulaire basée sur le deuxième signal filtré, afin de que les anomalies possibles puissent être diagnostiquées de manière aussi efficace et significative que possible ; et
d'un dispositif d'analyse (30), disposé de façon à comparer la première valeur angulaire calculée et la deuxième valeur angulaire calculée et à déduire une anomalie possible à partir d'une divergence entre la première valeur angulaire calculée et la deuxième valeur angulaire calculée.

2. Appareil selon la revendication 1, dans lequel la première unité de traitement (10) comprend un premier dispositif d'échantillonnage, disposé de façon à échantillonner le premier signal filtré avec une première fréquence d'échantillonnage ;
et la deuxième unité de traitement (20) comprend un deuxième dispositif d'échantillonnage, disposé de façon à échantillonner le deuxième signal filtré avec une deuxième fréquence d'échantillonnage ;
et dans lequel la première unité de calcul (12) calcule la première valeur angulaire basée sur le premier signal filtré échantillonné et la deuxième unité de calcul (22) calcule la deuxième valeur angulaire basée sur le deuxième signal filtré échantillonné.

3. Appareil selon la revendication 2, dans lequel la première fréquence d'échantillonnage est supérieure à la deuxième fréquence d'échantillonnage.

4. Appareil selon la revendication 2 ou 3, dans lequel le premier dispositif d'échantillonnage comprend un convertisseur numérique-analogique Delta-Sigma (DS-ADC) .

5. Appareil selon l'une des revendications 2 à 4, dans lequel le deuxième dispositif d'échantillonnage comprend un convertisseur numérique-analogique à approximations successives (SAR-ADC).

6. Appareil selon l'une des revendications 1 à 5, dans lequel la première unité de calcul (12) traite le signal du capteur de déplacement angulaire (2) en se basant sur une différence de tension entre un premier fil de signal et un deuxième fil de signal ; et
la deuxième unité de traitement (22) traite le signal du capteur de déplacement angulaire (2) en se basant sur une première tension entre le premier fil de signal et un potentiel de référence et une deuxième tension entre le deuxième fil de signal et le potentiel de référence.

7. Système de propulsion, doté :
d'un moteur électrique (3), disposé de façon à entraîner un arbre de transmission ;
d'un capteur de déplacement angulaire (2), lequel est couplé à l'arbre de transmission du moteur électrique (3) et est disposé de façon à créer un signal électrique qui correspondant à la position relative de l'arbre de transmission ;
d'un appareil destiné à mesurer un signal d'un capteur de déplacement angulaire (2) des revendications 1 à 6.

8. Système de propulsion selon la revendication 7, dans lequel le capteur de déplacement angulaire (2) comprend un résolveur.

9. Procédé destiné à mesurer un signal d'un capteur de déplacement angulaire (2) afin de déduire une anomalie possible, doté des étapes :
réception (S1) d'un signal du capteur de déplacement angulaire (2) ;
application (S2) d'un filtrage passe-bande au signal reçu depuis le capteur de déplacement angulaire, afin d'obtenir un premier signal filtré, dans lequel les composantes de fréquence supérieures et inférieures à un intervalle de fréquence prédéfini sont atténuées et une composante continue du signal reçu sont supprimées ;
calcul (S3) d'une première valeur angulaire basée sur le premier signal filtré, afin de produire un signal angulaire avec une haute qualité ;
application (S4) d'un filtrage combiné passe-bande et passe-bas opérant en parallèle au signal reçu depuis le capteur de déplacement angulaire, afin d'obtenir un deuxième signal filtré, dans lequel les composantes de fréquence supérieures à une fréquence limite prédéfinie sont atténuées,
calcul (S5) d'une deuxième valeur angulaire basée sur le deuxième signal filtré, afin de que les anomalies possibles puissent être diagnostiquées de manière aussi efficace et significative que possible ; et
Comparaison (S6) de la première valeur angulaire calculée et de la deuxième valeur angulaire calculée ;
déduction d'une anomalie possible à partir d'une divergence entre la première valeur angulaire calculée et la deuxième valeur angulaire calculée.

10. Procédé selon la revendication 9, dans lequel l'étape (S1) de réception d'un signal du capteur de déplacement angulaire (2) reçoit deux signaux déphasés réciproquement d'un résolveur.
